# EUROPEAN PATENT APPLICATION

(11) **EP 1 930 916 A2**
(43) Date of publication of application: **11.06.2008**
(21) Application number: 07023480.2
(22) Date of filing: 04.12.2007
(51) Int. Cl.: H01F 5/02, H01F 5/04, B62J 6/12

(54) **Electric generating coil assembly and electric generator hub**

(30) Priority: 04.12.2006 JP 2006327413
(71) Applicant: SHIMANO INC., Osaka 590-8577 (JP)
(72) Inventor: Nakano, Keisuke, Sakai City Osaka 590-8577 (JP)
(74) Representative: Grosse, Wolfgang

(57) **Abstract**

An electric generating coil assembly 44 is provided for an electric generating mechanism of an electric generator hub 10. The electric generating coil assembly 44 has a wire coil part 51 and a wire connecting part 52. The wire coil part 51 has a coiled section 51 a made of an aluminum wire material. The wire connecting part 52 is connected to at least one of the two ends of the wire coil part 51, and is made of a conductive metal wire material which is more bendable than the coiled section of the wire coil part 51.

## Description

### CROSS-REFERENCE TO RELATED APPLICATIONS

This application claims priority under 35 U.S.C. § 119 to Japanese Patent Application No. 2006-327413, filed December 4, 2006. The entire disclosure of Japanese Patent Application No. 2006-327413 is hereby incorporated herein by reference.

### BACKGROUND OF THE INVENTION

### Field of the Invention

This invention generally relates to a coil assembly for an electric generating mechanism. More specifically, the present invention relates to a coil assembly which can be installed in an electric generating mechanism that can be mounted on a human-powered vehicle such as a bicycle, tricycle or the like. This invention also relates to an electric generator hub.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle.

Recently, electric generating devices have been installed on bicycles (one example of a human-powered vehicle) as power sources for headlamps. Such electric generating devices generate electricity in accordance with the rotation of the wheels of the bicycle. Block dynamos that contact the wheel rims or the like, and electric generator hubs that are disposed on the hubs of the wheels, have been known in the art. All of these electric generating devices have an electric generating mechanism which has a magnet that rotates in accordance with the rotation of the wheels, and a coil assembly that is disposed on the inner circumferential side of the magnet. The coil assembly has a bobbin, a coil part which is formed by, for example, wrapping a copper wire with a high specific gravity around the bobbin, and connecting parts which are formed as integral parts of the wire coil part, and which extend to the outside of the bobbin from both ends of the wire coil part. Since the wrapping direction of the wire material on the bobbin in the coil assembly and the direction in which the wire material in the wire connecting parts is led out intersect, the wire connecting part on one end of the wire coil part is bent from the bobbin along the outer circumferential surface of the bobbin. Furthermore, this connecting part is further bent by a wiring mounting groove formed in the outer circumferential surface of the hub axle, and is disposed in the wiring mounting groove so as to run along the hub axle. After being bent, the tip end of this connecting part is connected to a connector (one example of a connecting terminal) that is mounted on the shaft end part of the hub axle. The wire connecting part on the other end of the wire coil part is electrically connected to the hub axle, and is grounded. (See, for example, Figures 2 and 3 of Japanese Patent Application Laid-Open No. 2001-202017.).

Since human-powered vehicles such as bicycles, tricycles and the like are driven by human power, it is important that the weight of the electric generating mechanism mounted on such vehicles be reduced in order to reduce the burden on the rider. In the conventional construction described above, the coil of the coil assembly uses copper wire which has a high specific gravity. Accordingly, the weight of the coil assembly is increased. Consequently, it is difficult to achieve a reduction in the weight of the electric generating device. It is therefore conceivable that lightweight aluminum might be used as the material of the coil. However, since aluminum has a low Young's modulus compared to copper, the amount of strain within the elastic limits is small. Accordingly, if bent sections are formed between the wire coil part and the wire connecting part, and in the part that is mounted in the wiring mounting groove, there is a danger that wire breakage will occur in the bent sections.

In view of the above, it will be apparent to those skilled in the art from this disclosure that there exists a need for an improved coil assembly. This invention addresses this need in the art as well as other needs, which will become apparent to those skilled in the art from this disclosure.

### SUMMARY OF THE INVENTION

One object of the present invention is to provide a coil assembly in which wire breakage is less likely to occur in the coil assembly while achieving a weight reduction in the coil assembly.

The foregoing objects can basically be attained by providing an electric generating coil assembly that basically comprises an aluminum wire coil part and a conductive wire connecting part. The aluminum wire coil part includes a first end section, a second end section and an aluminum coiled section. The conductive wire connecting part is electrically connected to at least one of the first and second end sections of the wire coil part, with the conductive wire connecting part being at least partially formed of a more bendable material than the aluminum coiled section of the wire coil part.

In this coil assembly, the wire connecting part, which is connected to the wire coil part, is provided in order to supply electric power to an external device such as a headlamp or the like. The wire connecting part is made of a conductive metal wire material that is more bendable than the wire coil part. Accordingly, even if a bent section which is bent, for example, approximately 90 degrees is formed in the wire connecting part, the wire connecting part tends not to undergo any wire breakage. Furthermore, a reduction in weight can be achieved by making the other parts from a lightweight aluminum wire material. Here, since the coiled section of the wire coil part is made of an aluminum wire material, and the wire connecting part which has more bent sections than the wire coil part is made of a conductive metal wire material that is more bendable than the wire coil part, the coil assembly can be made less likely to undergo wire breakage, while achieving a reduction in the weight of the coil assembly.

The electric generating coil assembly according to a second aspect is the assembly according to the first aspect, wherein the conductive wire connecting part includes a bent section and a rectilinear section, with the bent section being connected to the first end section of the wire coil part, and being bent at an intermediate point along the bent section, and the rectilinear section extending rectilinearly from the bent section with at least the bent section being made of a copper wire material. In this case, since at least the bent section is made of a copper wire material that has a high bendability, the coil assembly can be made less likely to undergo wire breakage; furthermore, if only the bent section is made of a copper wire material, a further reduction in the weight of the coil assembly can be achieved.

The electric generating coil assembly according to a third aspect is the assembly according to the first or second aspect, further comprises a bobbin including a tubular body portion and a pair of flange parts disposed on opposite axial ends of the tubular body portion, with the aluminum wire coil part wrapped around an outer circumferential surface of the tubular body portion and the conductive wire connecting part extending externally from at least one of the flange parts. In this case, since the wire coil part is wrapped around the bobbin, the shape of the wire coil part is stabilized; furthermore, since the easily bent sections on the outside of the first and second flanges are the wire connecting parts, wire breakage in the wire connecting parts tends not to occur.

The electric generating coil assembly according to a fourth aspect is the assembly according to any of the first through third aspects, wherein the conductive wire connecting part is joined to the wire coil part by welding. In this case, the wire connecting parts and coil part are firmly joined by a welding joint such as brazing, welding or the like.

The electric generating coil assembly according to a fifth aspect is the assembly according to any of the first through fourth aspects, wherein the first end section of the aluminum wire coil part is curved; and the conductive wire connecting part includes a curvilinear section connected to the first end section of the aluminum wire coil part, with the curvilinear section being curved as a continuation of the first end section. In this case, since the wire coil part is constructed only by a curved section, and the bent sections are all constructed in the wire connecting parts, wire breakage in the wire coil part tends not to occur.

The electric generating coil assembly according to a sixth aspect is the assembly according to any of the first through fifth aspects, wherein at least one of the first and second end sections includes an aluminum bent section extending between the coiled section of the wire coil part and the conductive wire connecting part, with at least a bent section of the conductive wire connecting part being made of a copper wire material. In this case, since the wire coil part is made of an aluminum wire material, the weight of the wire coil part can be reduced. Furthermore, the bent section formed in the wire coil part is made of an aluminum wire material, but the bent sections formed in the wire connecting parts are made of a copper wire material. Accordingly, wire breakage in the wire connecting parts can be prevented. Moreover, if the bent section formed in the wire coil part is made of a copper wire material, wire breakage can be further prevented. Even if the bent section formed in the wire coil part is made of an aluminum wire material, the wire material in the wire coil part tends not to move; accordingly, wire breakage tends not to occur. Here, since the wire coil part is made of an aluminum wire material, and at least the bent sections in the wire connecting parts are made of a copper wire material that has a high bendability, wire breakage of the coil assembly becomes less likely to occur, while at the same time a reduction in the weight of the coil assembly is achieved.

A generator hub according to a seventh aspect is a hub that includes the coil assembly according to any of the first through sixth aspects. The hub axle is a shaft that can be mounted on a human-powered vehicle. The electric generator hub includes a hub axle, a hub shell rotatably mounted on the hub axle and a generator mechanism with a magnet connected to the hub shell and an internal fixed unit including the coil assembly mounted on the hub axle. This is a mechanism that generates electricity via the relative rotation of the hub shell and hub axle. In this electric generator hub, wire breakage of the coil assembly of the internal fixed unit tends not to occur, while at the same time a reduction in the weight of this coil assembly is achieved.

The electric generator hub according to an eighth aspect is the hub according to the seventh aspect, wherein the electric generating mechanism is a claw-pole electric generating mechanism in which the internal fixed unit further includes a yoke surrounding the periphery of the coil assembly, with a plurality of sets of first and second stacked yokes facing each other on either side of the coil assembly. In this case, as a result of the electric generating mechanism being formed with a stacked claw-pole structure, the generation of overcurrents can be suppressed, and the output characteristics can be improved.

The electric generator hub according to a ninth aspect is the hub according to the eighth aspect, wherein the internal fixed unit further includes a cover member that covers at least a portion of outer circumferential surfaces of the first and second stacked yokes. In this case, since at least portions of the outer circumferential surfaces of the claw-pole yokes which show little overcurrent generation are covered by a cover member, the plate-shaped pieces that constitute the first and second stacked yokes tend not to be shifted, and tend not to fall out of alignment. Accordingly, even if the gap between the permanent magnet and the yoke outer circumferential portions of the first and second stacked yokes in which a plurality of plate-shaped pieces are stacked is made narrow, the yokes tend not to contact the permanent magnet.

The electric generator hub according to a tenth aspect is the hub according to any of the seventh through ninth aspects, wherein the conductive wire connecting part has first and second end portions that are connected to both ends of the wire coil part, with the first end portion being connected to a ground terminal that is electrically connected to the hub axle; and the second end portion being connected to an external terminal that is mounted on the hub axle outside of the hub shell. In this case, as a result of first and second connecting parts being connected to both ends of the wire coil part, wire breakage tends not to occur even if bent sections are formed in order to supply electric power to the outside of the hub.

In the present invention, the wire coil part is made of an aluminum wire material, and the wire connecting parts that have more bent sections than the wire coil part are made of a conductive metal wire material that is more bendable than the wire coil part. As a result, wire breakage of the coil assembly tends not to occur, while at the same time a reduction in the weight of the coil assembly is achieved.

In another aspect of the present invention, the wire coil part except for the bent section is made of an aluminum wire material, and at least the bent section of the wire connecting part is made of a conductive metal wire material that has a high bendability. Accordingly, wire breakage of the coil assembly tends not to occur, while at the same time a reduction in the weight of the coil assembly is achieved.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is a side elevational view of a bicycle with a claw-pole electric generator hub in accordance with a first embodiment of the present invention;
Figure 2 is a partial cross-sectional view of the claw-pole electric generator hub of the bicycle illustrated in Figure 1 in accordance with the first embodiment of the present invention;
Figure 3 is a first end perspective view of an internal fixed unit of the claw-pole electric generator illustrated in Figure 2 in accordance with the first embodiment of the present invention;
Figure 4 is a second end perspective view of the internal fixed unit illustrated in Figure 3 in accordance with the first embodiment of the present invention;
Figure 5 is an end elevational view of the coil assembly of the internal fixed unit illustrated in Figures 3 and 4 in accordance with the first embodiment of the present invention;
Figure, 6 is a partial cross-sectional view of the coil assembly illustrated in Figure 5 in accordance with the first embodiment of the present invention;
Figure 7 is an enlarged partial side elevational view of a coil part the coil assembly illustrated in Figures 5 and 6 in accordance with the first embodiment of the present invention;
Figure 8 is an enlarged, partial perspective view of the bobbin and a yoke of the claw-pole electric generator illustrated in Figures 2 and 3 in accordance with the first embodiment of the present invention;
Figure 9 is an end elevational view of the bobbin and yoke illustrated in Figure 8 in accordance with the first embodiment of the present invention;
Figure 10 is a side elevational view of a pair of plate-shaped pieces of the yoke illustrated in Figures 8 and 9 in accordance with the first embodiment of the present invention;
Figure 11 is a front elevational view of a plurality of the plate-shaped pieces illustrated in Figure 10 in accordance with the first embodiment of the present invention; and
Figure 12 is an enlarged partial cross-sectional view, similar to Figure 6, of coil assembly in accordance with a second embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

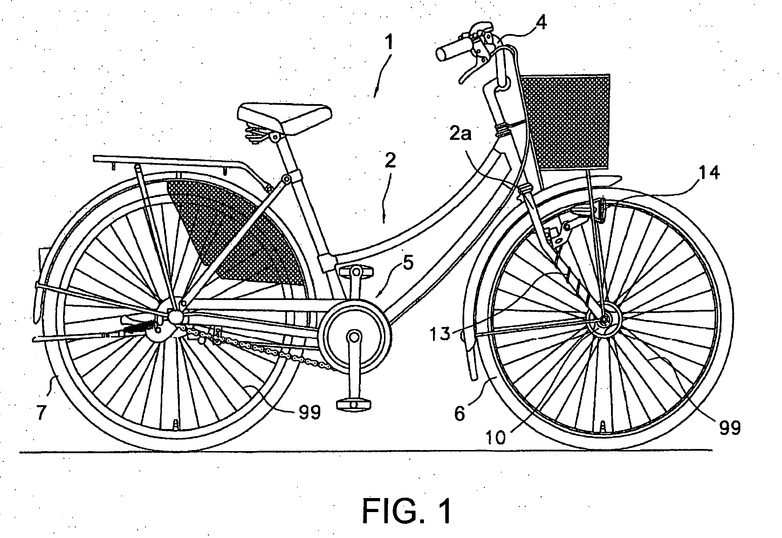

Referring initially to Figure 1, a bicycle 1 is illustrated in accordance with a first embodiment of the present invention. The bicycle 1 is one example of a human-powered vehicle. The bicycle 1 includes a frame 2, a handlebar 4, a drive unit 5, a front wheel 6 and a rear wheel 7. The frame 2 includes a front fork 2a. The drive unit 5 includes a chain, pedals and the like. The front and rear wheels 6 and 7 are bicycle wheels having a plurality of spokes 99. The front wheel 6 has an electric generator hub 10 that is incorporated therein. Electricity generated by the electric generator hub 10 is supplied to a headlight 14 with an optical or light sensor via a power supply line 13.

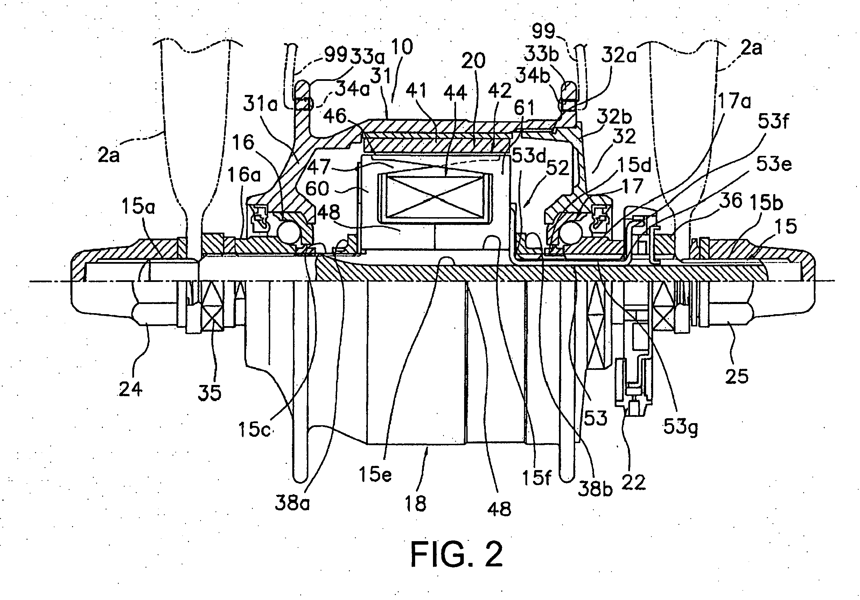

Referring to Figure 2, the electric generator hub 10 is mounted on a distal end of the front fork 2a together with the front wheel 6 of the bicycle 1. The electric generator hub 10 includes a hub axle 15, a pair of bearings 16 and 17, a hub shell 18, an electric generating mechanism or a claw-pole electric generator 20 and a connector 22. The power supply line 13 is connected to the connector 22. The hub axle 15 is fixed at both ends to the front fork 2a. The hub shell 18 is disposed on an external peripheral side of the hub axle 15. The hub shell 18 is rotatably supported on the hub axle 15 by the bearings 16 and 17. The electricity-generating mechanism 20 is disposed between the hub axle 15 and the hub shell 18. The connector 22 supplies electricity generated by the electricity-generating mechanism 20 to an external electrical device such as, for example, the headlight 14, for example, or another such external electrical device or the like. The connector 22 is one example of an external terminal.

In a case where the front wheel 6 is a twenty-six inch wheel, the hub shell 18 rotates at a rotational speed of approximately 240 rpm at a speed of 30 km per hour. Accordingly, the electric generator hub 10 rotates at a rotational speed that is an order of magnitude lower than the rotational speed of an ordinary generator such as a generator for use in bicycles or the like.

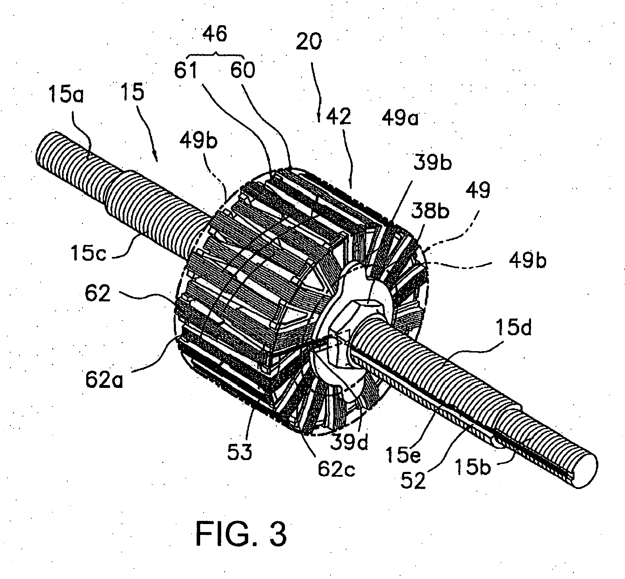

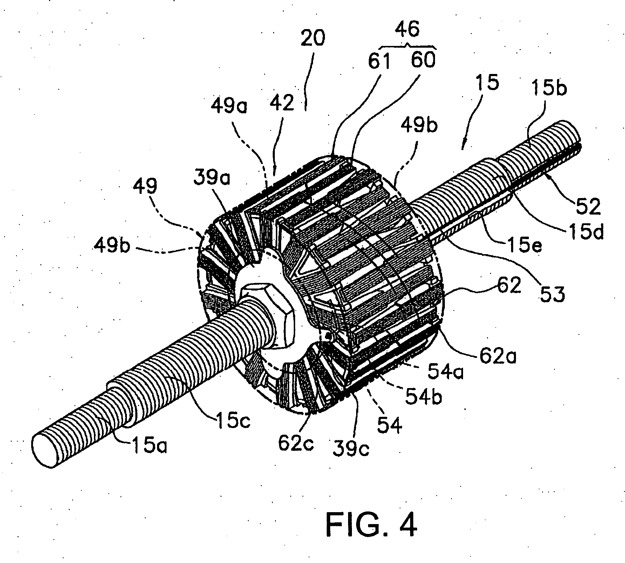

The external peripheral surface of the hub axle 15 has first, second, third and fourth male threaded sections 15a,15b, 15c and 15d, respectively, and a wiring insertion groove 15e. The first and second male threaded sections 15a and 15b are formed at either end of the hub axle 15. The third and fourth male threaded sections 15c and 15d are larger than the first and second male threaded sections 15a and 15b as seen in Figures 3 and 4. The third and fourth male threaded sections 15c and 15d are formed between the first and second male threaded sections 15a and 15b, with the third male threaded section 15c being located closer to the first male threaded section 15a and fourth male threaded section 15d being located closer to the second male threaded section 15b.

The wiring insertion groove 15e is provided for passing a connecting part 52 (described later) along the external peripheral surface of the hub axle 15. The wire connecting part 52 connects the electric generating mechanism 20 with the connector 22. The connector 22 is mounted on the outer circumferential surface of the hub axle 15 from the mounting part of the electric generating mechanism 20 to the end part of the first male threaded section 15b. The wiring insertion groove 15e is formed from the third male threaded section 15c to an end of the second male threaded section 15b. The hub axle 15 is non-rotatably fixed to the front fork 2a by a pair of fastening nuts 24 and 25. The fastening nuts 24 and 25 are screwed onto the first male threaded sections 15a and 15b, respectively, and apply an axial force to the front fork 2a to prevent rotation. The hub axle 15 has a large-diameter mechanism mounting part 15f for mounting the electric generating mechanism 20 onto a central part of hub axle 15.

The hub shell 18 has a case main body 31, and a cover member 32 which covers one end (the right end in Figure 2) of the case main body 31. The case main body 31 is a tubular member which is formed so as to extend in the axial direction of the hub axle 15. The cover member 32 is fastened to the case main body 31 by being screwed into one end (the right end in Figure 2) in the axial direction. A left wall part 31 a is formed on the other end (left end in Figure 2) of the case main body 31. The left wall part 31 a is mounted on the hub axle 15 via a bearing 16, so that this wall part is free to rotate. The outer circumferential surface on both end parts of the case main body 31 has pair of hub flanges 33a and 33b formed thereon. The hub flanges 33a and 33b are provided with a plurality of mounting holes 34a and 34b, respectively for mounting the inside end parts of the spokes 99. The mounting holes 34a and 34b are formed with the phase shifted by one half at equal intervals in the circumferential direction in the hub flanges 33a and 33b.

The cover member 32 has a screw cylinder part 32a and a circular plate-shaped wall part 32b. The screw cylinder part 32a is screwed into the inner circumferential surface of the case main body 31. The circular plate-shaped wall part 32b is mounted on the hub axle 15 via the bearing 17 so that the circular plate-shaped wall part 32b is free to rotate. The cover member 32 is fastened to the case main body 31 by being screwed in via the screw cylinder part 32a.

The hub shell 18 having the case main body 31 and the cover member 32 is mounted on the hub axle 15 via a pair of cones 16a and 17a which are the inner races of the bearings 16 and 17. The cones 16a and 17a are respectively screwed onto the first male threaded sections 15a and 15b of the hub axle 15. The cones 16a and 17a are positioned and locked by a pair of lock nuts 35 and 36. The lock nut 36 on the right side locks the cone 17a, and fastens the connector 22 to the hub axle 15.

The electric generating mechanism 20 is a claw-pole electric generating mechanism that has a permanent magnet 41 and an internal fixed unit 42. The permanent magnet 41 is fastened to the inner circumferential surface of the case main body 31 of the hub shell 18. The internal fixed unit 42 is disposed facing the inner circumferential part of the permanent magnet 41. The permanent magnet 41 is fastened to the inner surface of the case main body 31 of the hub shell 18, and comprises a plurality of magnet bodies (e.g., four magnet bodies) split at equal intervals in the circumferential direction. In this permanent magnet 41, N poles and S poles are alternately magnetized at equal intervals, and respectively face the outer circumferential part of a claw-pole yoke 46 which will be described later.

The internal fixed unit 42 has a tubular coil assembly 44, a yoke 46 and a cover member 49. The yoke 46 is disposed so as to surround the periphery of the coil assembly 44. The cover member 49 covers at least a portion of the outer circumferential surface of the yoke 46. The internal fixed unit 42 is clamped by a pair of mounting nuts 38a and 38b that are respectively screwed onto the second male threaded sections 15c and 15d. The internal fixed unit 42 is thus fastened to the hub axle 15 to prevent rotation. A first washer 39a is disposed between the mounting nut 38a and the internal fixed unit 42 as shown in Figure 4. The first washer 39a is used as a ground terminal. The second washer 39b is disposed between the mounting nut 38b and the coil assembly 44 and the yoke 46 as shown in Figure 3. As shown in Figure 4, the first washer 39a has a connecting arm 39c that is used to electrically connect one end of the coil assembly 44 (described later) to the hub axle 15. The connecting arm 39c grounds the coil assembly 44. The connecting arm 39c extends radially from the outer diameter of the first washer 39a. As shown in Figure 3, a guide groove 39d is formed in the second washer 39b. The guide groove 39d is used to guide the other end of the coil assembly 44 (described later) into the wiring insertion groove 15e.

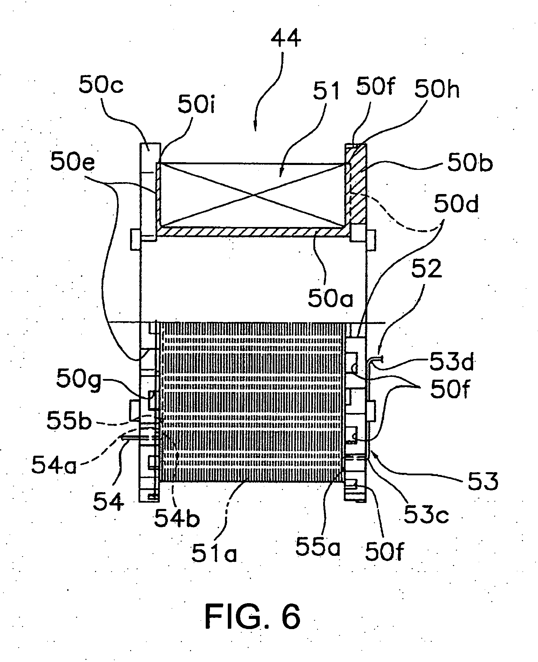

As shown in Figures 3 to 6, the coil assembly 44 has a bobbin 50 (Figure 6), a coil part 51 and a connecting part 52. The wire coil part 51 has a coiled section 51 a wrapped around the bobbin 50 and a first and second end sections. The wire connecting part 52 includes a first end portion 53 and a second end portion 54. The end portions 53 and 54 are connected to the opposite end sections 51 b of the wire coil part 51, respectively, as explained below.

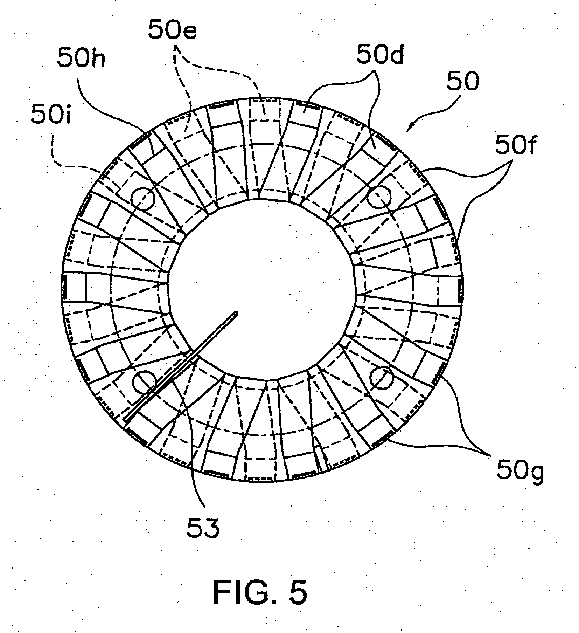

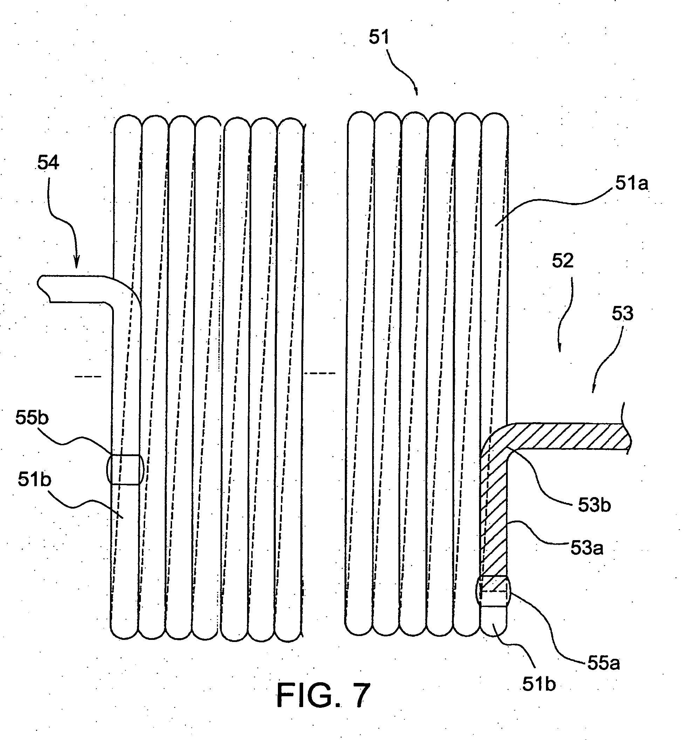

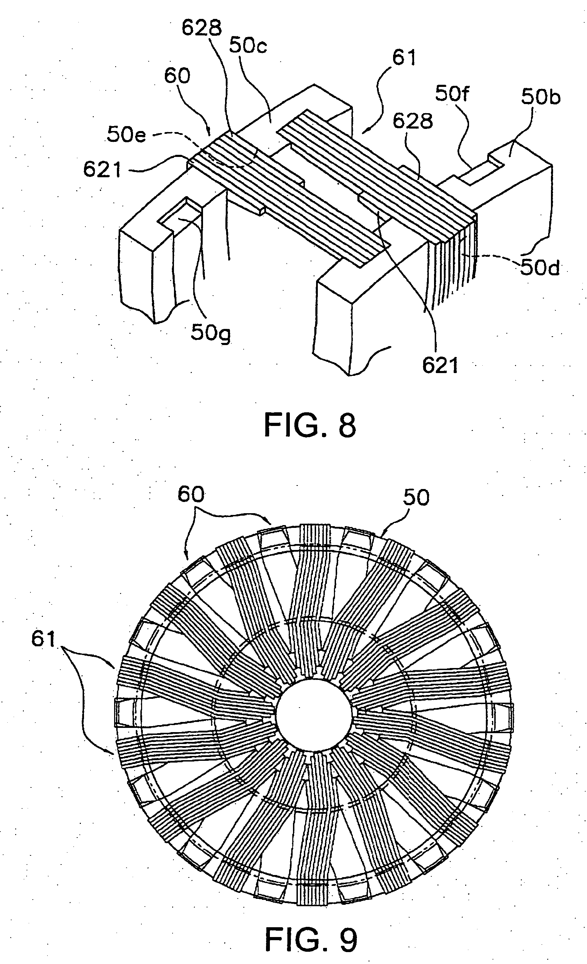

As shown in Figures 5 and 6 (in both Figures 5 and 6, the yoke is removed), the bobbin 50 has a tubular body portion 50a and first and second flanges 50b and 50c. The wire coil part 51 is wrapped around the outer circumference of the tubular body portion 50a. The first and second flanges 50b and 50c are formed on opposite axial ends of the body portion 50a. The first flange 50b has a plurality of first grooves 50d extending in a substantially radial pattern in an external axial side of the first flange 50b. The second flange 50c has a plurality of second grooves 50e extending in a substantially radial pattern in an external side of the second flange 50c. The first and second grooves 50d and 50e are alternately misaligned as viewed in the axial direction. That is, the second grooves 50e of the second flange 50c are positioned between two adjacent first grooves 50d of the first flange 50b. The first and second grooves 50d and 50e partially overlap near a middle of the substantially radial pattern, as seen from the axial direction. Furthermore, the first and second grooves 50d and 50e almost entirely overlap in an internal peripheral side of the substantially radial pattern, as seen from the axial direction. Portions of the external peripheral sides of the first and second grooves 50d and 50e are cut out to form a plurality of first and second notches 50h and 50i as seen in Figures 5, 6 and 8. Also, referring to Figure 7, a plurality of first and second concavities 50f and 50g with a specific length from the internal side to the external side in the axial direction are formed in the first and second flanges 57 and 58 where the first and second grooves 50d and 50e are not formed. In Figure 8, a portion of the yoke is removed for convenience of description.

The wire coil part 51 is made of an aluminum wire material whose surface is covered with an insulating material such as varnish or the like. As shown in Figures 6 and 7, the wire coil part 51 has a coiled section 51 a which is wrapped in spiral form around the body portion 50a of the bobbin 50. The coiled section 51 a constitutes the main part of the wire coil part 51. The cross section of the aluminum wire material of the coiled section 51 a is rectangular or round. In the case of a round shape, the wire diameter is preferably about 0.65 mm. The volume of the wire coil part 51 is 13,020 mm², and the volume of a conventional coil made of a copper wire material which generates substantially the same amount of electricity is 12,050 mm². Accordingly, the volume is slightly increased. Furthermore, the weight of the aluminum coil part 51 is thirty-five grams, while the weight of a conventional coil made of a copper wire material is 104 grams. Accordingly, the weight is greatly reduced in the aluminum coil part 51.

Moreover, the Young's modulus of aluminum is 70.3 GP (gigapascals), while the Young's modulus of copper is 130 GP. A copper wire material is thus greatly distorted in the elastic range compared to an aluminum wire material. Accordingly, a copper wire material tends not to break even if bent to a greater extent than an aluminum wire material. In other words, it is apparent that the bendability is high. Moreover, the electrical resistivity of copper is 1.68 × 10⁻⁸ Ωm, while the electrical resistivity of aluminum is 2.65 × 10⁻⁸ Ωm; accordingly, a copper wire material has a smaller electrical resistivity. The wire connecting part 52 is made of a conductive metal wire material which is more bendable than the wire coil part 51. In this embodiment, the wire connecting part 52 is made of a copper wire material whose surface is covered by an insulating material such as varnish or the like. The first end portion 53 of the wire connecting part 52 is joined to the coiled section 51 a of the wire coil part 51 by a joining section 55a. Brazing, soldering, a low-resistance welding joining method (including spot projection) or the like can be used as the joining method. Furthermore, solid-phase joining such as crimping or the like can also be used.

As shown in Figures 2, 3, 6 and 7, the first end portion 53 has a curvilinear section 53a, five bent sections 53b through 53f and a rectilinear section 53g. The curvilinear section 53a is joined to the coiled section 51a and is bent as a continuation of the coiled section 51 a. The five bent sections 53b through 53f are bent at intermediate points of the first end portion 53. The rectilinear section 53g is disposed between the bent section 53d and bent section 53e. The first end portion 53 is bent approximately 90 degrees from the curvilinear section 53a, and passes through the first flange 50b. This part of the first end portion 53 is then further bent approximately 90 degrees, and extends along the guide groove 39d of the second washer 39b. Then, after reaching the wiring insertion groove 15e, the first end portion 53 is further bent approximately 90 degrees, and extends to the end part of the hub axle 15 via the wiring insertion groove 15e. The extended tip end of the first end portion 53 is then bent and connected to the connector 22. The bent section 53b is formed so as to be able to pass through the first flange 50b of the bobbin 50. The bent section 53d is formed so that the bent section 53c follows the outside surface of the first flange 50b after passing through the first flange 50b. The bent section 53d is formed so as to follow the wiring insertion groove 15e of the hub axle 15 after following the guide groove 39d of the second washer 39b. The rectilinear section 53g is formed so as to follow the wiring insertion groove 15e. The two bent sections 52e and 52f are formed so as to be connected to the connector 22. For this reason, a high bendability is required in the first end portion 53. Accordingly, a copper wire material which has high bendability is used.

As shown in Figures 4 and 6, the second end portion 54 has a curvilinear section 54a and a bent section 54b. The curvilinear section 54a is joined via a joining section 55b to the coiled section 51 a formed on the inner circumferential side of the wire coil part 51. The bent section 54b is used to allow passage through the second flange 50c. The tip end part that passes through the second flange 50c is electrically connected to the first washer 39a by welding, and is electrically connected to the hub axle 15 via a mounting nut 38a or the like.

As shown in Figure 2, the yoke 46 has a stator yoke 47 and a core yoke 48. The stator yoke 47 is disposed between the permanent magnet 41 and the coil assembly 44. The core yoke 48 is magnetically coupled with the stator yoke 47, and is disposed between the inner circumferential part of the coil assembly 44 and the hub axle 15. Furthermore, in this embodiment, the stator yoke 47 and the core yoke 48 are integrally formed.

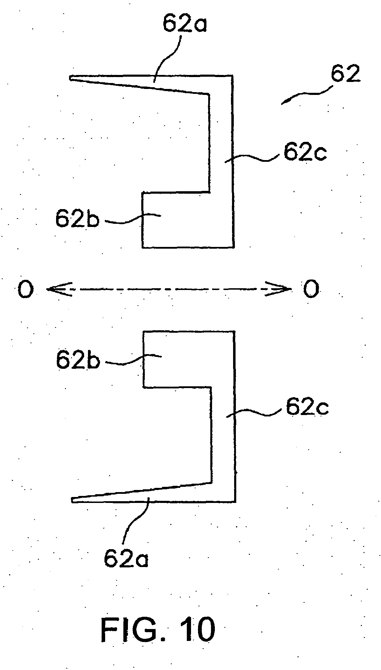

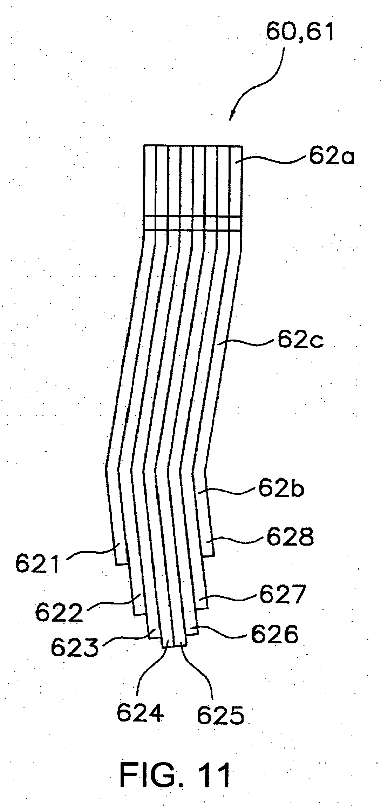

Figure 9 shows the yoke 46 mounted on the bobbin 50, while Figures 10 and 11 show just the yoke 46 removed. As shown in Figures 8 and 9, this yoke 46 has a plurality of sets of first stacked yokes 60 and a plurality of sets of second stacked yokes 61. The first stacked yokes 60 are mounted so as to fit into a groove 50e in the second flange 50c of the bobbin 50. The second stacked yokes 61 are similarly mounted so as to fit into a groove 50d formed in the first flange 50b of the bobbin 50. The sets of both stacked yokes 60 and 61 are disposed on opposite sides in the axial direction with the coil assembly 44 in between.

The stacked yokes 60 and 61 are constructed by stacking a plurality of plate-shaped pieces 62 of the type shown in Figures 10 and 11. The plate-shaped pieces 62 are formed from silicon steel (more specifically, non-oriented silicon steel) which has an oxide coating film formed on the surface. The plate-shaped pieces 62 have the same basic shape. The plate-shaped pieces 62 have a yoke outer circumferential part 62a which functions as the stator yoke 47, a yoke inner circumferential part 62b which functions as the core yoke 48, and a connecting part 62c that connects these yokes. The yoke outer circumferential part 62a is installed so as to extend along the axial direction of the of the hub axle 5 (direction O-O in Figure 10) from one end part of the wire connecting part 62c, and has a shape that becomes more slender toward the tip end. Furthermore, the yoke inner circumferential part 62b is similarly disposed so as to extend along the axial direction from the other end part of the wire connecting part 62. As shown in Figure 11, these plate-shaped pieces 62 are formed so that the yoke outer circumferential part 62a and yoke inner circumferential part 62b are positioned on different radial lines as seen in the axial direction.

Furthermore, the respective plate-shaped pieces 62 have a thickness of 0.25 to 1 mm. Parts having a thickness of 0.5 mm have a high utilization value in terms of both cost and performance. The respective plate-shaped pieces 62 have different lengths. Specifically, the respective stacked yokes 60 and 61 are constructed by stacking eight plate-shaped pieces 62 in the circumferential direction. In the respective stacked yokes 60 and 61, as shown in Figure 11, a pair of plate-shaped pieces 621 and 628 located furthest toward the outside has the shortest length on the inner circumferential side. The two of plate-shaped pieces 622 and 627 located on the inside of the parts 621 and 628 have the next shortest length, the two plate-shaped pieces 623 and 626 located on the inside of these parts 622 and 627 have the next shortest length, and the two plate-shaped pieces 624 and 625 located furthest toward the inside are formed with the longest length. By setting the length in this way, it is possible to form an efficient construction so that the inner circumferential surfaces of the stacked yokes that are adjacent in the circumferential direction do not contact each other, and so that the maximum cross-sectional area of the magnetic path can be obtained.

Furthermore, as seen from Figure 8, the plate-shaped pieces 621 and 628 that are positioned on both outer sides in the circumferential direction (among the plate-shaped pieces 62 that form the respective stacked yokes 60 and 61) are formed so that the length of the core outer circumferential part 62a is shorter than that of the other plate-shaped pieces by approximately one-half. This is done in order to prevent the plate-shaped pieces 621 and 628 that are adjacent in the circumferential direction from approaching each other, and thus, to suppress the leakage of magnetic flux between the two parts.

Furthermore, the respective plate-shaped pieces 62 described above can be used in common between the first stacked yokes 61 and second stacked yokes 62. Such plate-shaped pieces 62 are stacked and fit into grooves 50d and 50e formed in the respective flanges 50b and 50c of the bobbin 50. Furthermore, the tip end parts of the yoke outer circumferential parts 62a of the respective plate-shaped pieces are fit into and retained in concavities 50f and 58g formed in the flanges 50b and 50c on the opposite sides of the bobbin 50.

In the yoke 46, as shown in Figure 2, the yoke inner circumferential parts 62b used as the core yokes 48 of the first and second stacked yokes 60 and 61 are positioned on the inner circumferential side of the coil assembly 44, and the yoke outer circumferential parts 62 used as the stator yokes 47 are positioned between the coil assembly 44 and permanent magnet 41. Furthermore, as is clear from Figure 9 and Figure 2, the yoke inner circumferential parts 62b of the first stacked yokes 60 and the second stacked yokes 61 are directly connected to each other. Accordingly, some other member comprising a magnetic material for the purpose of connecting the first stacked yokes 60 and second stacked yokes 61 is unnecessary, and the resistance can be kept to an extremely small value.

As shown in Figures 3 and 4, the cover member 49 is formed so as to cover the outer circumferential surface and both side surfaces of the yoke 46. The cover member 49 has an outer circumferential part 49a which covers the outer circumferential surface of the yoke, and a pair of side surface parts 49b which cover both side surfaces of the yoke 46. The cover member 49 is formed by applying heat to cause shrinkage of a tubular member made of a synthetic resin that has heat-shrink properties. The cover member 49 is made of (e.g.) a transparent synthetic resin that has the heat-shrink properties of a resin selected from a set comprising vinyl chloride resins, fluororesins, silicone resins, ethylene-propylene resins, and polyethylene terephthalate (PET) resins. During heat shrinkage, the cover member 49 pushes the plate-shaped pieces 62 toward the inner circumference, and facilitates the arrangement of the yoke outer circumferential surface. In this embodiment, the cover member 49 is made of a polyethylene terephthalate (PET) resin that has a thickness of approximately 0.05 mm. It is advisable that the thickness of the cover member 49 be approximately 0.03 mm to 0.5 mm, preferably about 0.04 mm to 0.2 mm. In cases where the thickness of the cover member 49 is less than 0.03 mm, the cover member tends to be ruptured and damaged, and it becomes difficult to arrange the plate-shaped pieces 62 via the cover member 49 during heat shrinkage. On the other hand, in cases where the thickness exceeds 0.5 mm, it becomes necessary to open a large gap with the permanent magnet 41, and the generating efficiency drops. Here, since at least the outer circumferential surface of the claw-pole yoke 46 which shows little generation of overcurrents is covered by the cover member 49, the plate-shaped pieces 62 that constitute the first and second stacked yokes tend not to shift. Accordingly, even if the gap between the permanent magnet 41 and the yoke outer circumferential parts 62a of the first and second stacked yokes 60 and 61 in which a plurality of plate-shaped pieces 62 are stacked is made narrow, the yoke 46 tends not to contact the permanent magnet 41. Furthermore, the entire assembly is not fastened together with a synthetic resin; rather, only (at least) a portion of the outer circumferential surface of the yoke 46 is covered. Accordingly, even if a cover member 49 is installed, the increase in the weight of the internal fixed unit 42 is slight, and the increase in the weight of the electric generating mechanism 20 can be kept to a minimum.

Next, the generation of electricity by the electric generator hub 10 will be described.

When the front wheel, i.e., the hub shell 18, rotates relative to the hub axle 15 as the bicycle is ridden, the permanent magnet 41 rotates relative to the internal fixed unit 41 which is fastened to the hub axle 15. As a result, the permanent magnet 41 rotates on the outer circumferential side of the coil assembly 44 and the yoke outer circumferential part 62a of the yoke 46.

Here, in the case of the yoke outer circumferential parts 62a of the first stacked yokes 60 and the outer circumferential parts 62a of the second stacked yokes 61, when one set of these parts receives a supply of N pole magnetic flux from the permanent magnet 41, the other set of these parts receives a supply of S pole magnetic flux. Specifically, as a result of the rotation of the permanent magnet 41 on the outer circumferential side of the yoke outer circumferential parts 62a of the first and second stacked yokes 60 and 61, a first state in which the first stacked yokes 60 are N poles and the second stacked yokes 61 are S poles, and a second state in which the first stacked yokes 50 are S poles and the second stacked yokes 61 are N poles, are repeated, and an alternating magnetic flux is generated in the yoke inner circumferential parts 62b (core yokes 48) of both sets of the stacked yokes 60 and 61, which magnetically couples both sets of the stacked yokes 60 and 61. A current is generated in the coil assembly 44 by the alternating magnetic flux generated inside this coil assembly 44, and electricity is generated.

In the electric generator hub 10 of this embodiment, an aluminum wire material whose specific gravity is smaller than that of copper is used for the coil assembly 44 of the electric generating mechanism. Accordingly, the weight of the coil assembly 44 is light, and a reduction in the weight of the electric generator hub 10 can be achieved. Furthermore, since a conductive metal wire material (e.g., a copper wire material) which is more bendable than the aluminum wire material, and which tends not to break even when bent, is used in the wire connecting part 52, which is installed in order to supply electric power to an external device such as a headlamp or the like, and in which bent sections are readily formed, the coil assembly 44 tends not to show any wire breakage even if bent sections are formed.

In particular, bent sections that are connected to the coiled section 51 a of the wire coil part 51 are provided to the wire connecting parts, all of the bent sections are constructed by a connecting part 52 that has a high bendability, and the wire coil part 51 is constructed only by the curved section. Accordingly, wire breakage of the wire coil part 51 can be prevented to an even greater extent.

Furthermore, since the yoke 46 is constructed by stacking plate-shaped pieces 62, the generation of overcurrents can be suppressed compared to cases in which the yoke 46 is constructed by conventional sheet metal press molding.

Moreover, in a claw-pole structure of the type used in the present embodiment, in cases where the yoke 46 is simply replaced by a stacked structure, some other magnetic material is required in order to connect the yokes to each other; for this reason, the magnetic resistance is increased, and the efficiency drops. However, in the present embodiment, the shape of the yoke is devised so that the inner circumferential parts of the facing first and second stacked yokes 60 and 61 are directly connected to each other; accordingly, there is no need for another member used to connect the first and second stacked yokes, and the cross-sectional area that is necessary and sufficient to allow the passage of magnetic flux can be ensured. Consequently, the magnetic resistance can be made extremely small, and the efficiency can be improved.

Moreover, since at least the yoke outer circumferential surface is covered by the cover member 49, the plate-shaped pieces 62 that constitute the first and second stacked yokes 60 and 61 tend not to shift. Accordingly, even if the gap between the permanent magnet 41 and the yoke outer circumferential parts 62a of the first and second stacked yokes 60 and 61 in which the plate-shaped pieces 62 are stacked is made narrow, the yoke 46 tends not to contact the permanent magnet 41. Moreover, the entire assembly is not fastened via a resin; rather, it is sufficient to cover only (at least) the outer circumferential surface of the yoke 46. Accordingly, even if a cover member 49 is installed, the increase in the weight of the internal fixed unit 42 is small, and the increase in the weight of the electric generating mechanism 20 can be kept to a minimum.

### Other Embodiments

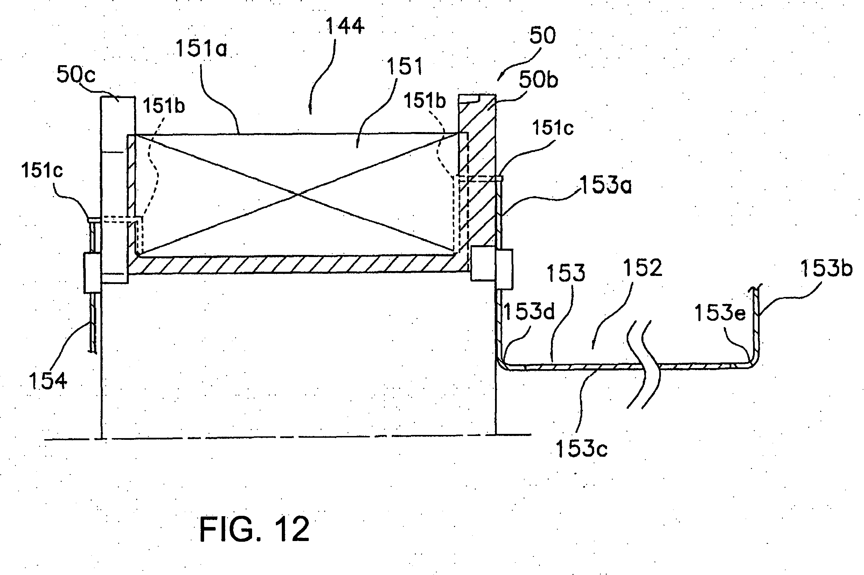

In the embodiment described above, the curvilinear section 53a is connected to the coiled section 51 a of the wire coil part 51, and the curvilinear section 53a is provided to the first end portion 53 and the wire connecting part 52 is disposed inside the bobbin 50. However, it is also possible to provide this connecting part 52 to the outside of the bobbin 50. In this case, the wire connecting part can be connected to at least one of the two ends of the wire coil part 51. For example, as shown in Figure 12, a coil part 151 of a coil assembly 144 is integrally formed via an aluminum wiring material. Bent sections 151b are formed in the wire coil part 151 in two places at both ends. These bent sections 151 b have the same shapes as the bent sections in the embodiment described above and are made of an aluminum wire material. However, it is also possible to make only the two end parts from a copper wire material. Since the wire coil part 151 is wrapped around the bobbin 50, this part tends not to move; and even if bent sections 151 b are formed, wire breakage is less likely to occur than in the wire connecting part. First and second connecting parts 153 and 154 of the wire connecting part 152 are joined to both ends 151c of the wire coil part 151. A joining method similar to that used in the embodiment described above can be used as the joining method. The wire connecting part 152 is made of a conductive metal wire material (e.g., a copper wire material) which is more bendable than the aluminum wiring material, and which tends not to break even if first and second bent sections 153d and 153e or the like are formed. Furthermore, in the embodiment shown in Figure 12, the bent sections 153d and 153e of the first connecting part 153 are constructed by specially formed first and second parts indicated by hatching that drops toward the right in Figure 12, and a third part 153c constructed from a rectilinear section indicated by hatching that rises toward the right between the first and second bent sections 153d and 153e. These first and second bent sections 153d and 153e are made of a conductive metal wire material that has a high bendability (e.g., a copper wire material), and the third part 153c is made of a lightweight aluminum wire material. Of course, it is also possible to make all of the second connecting part 153 from a conductive metal wire material that has a high bendability.

In the embodiment described above, a copper wire material was indicated as an example of a conductive metal wire material having a high bendability. However, any conductive wire material having a Young's modulus that is greater than that of aluminum may be used. For example, wire materials using iron, silver, lead or the like may be employed. Furthermore, aluminum alloys that have a high Young's modulus may also be used. Metals referred to in this specification, including aluminum and copper, also include alloys of the metals in addition to the metals themselves.

In the embodiment described above, a coil assembly used in an electric generator hub having a claw-pole structure was indicated as an example. However, the coil assembly of the present invention can also be applied to a block dynamo or electric generator hub that does not have a claw-pole structure.

In the embodiment described above, a bicycle was indicated as an example of a human-powered vehicle. However, the present invention can also be applied to coil assemblies used in all types of human-powered vehicles such as tricycles, quadricycles, wheelchairs and the like.

In the embodiment described above, the wire connecting parts were connected to both ends of the wire coil part. However, it is sufficient if a connecting part is connected to at least one of the two ends of the wire coil part (in particular, to the end that supplies electric power to the outside).

In the embodiment described above, the joining method used to join the wire coil part and the wire connecting parts was disclosed as brazing, soldering or a welding joining method such as low-resistance welding or the like, or as a solid-phase joining method such as crimping. However, the joining method of the present invention is not limited to these methods; any joining method may be used, as long as this method is a joining method that can electrically connect the wire coil part and the wire connecting parts.

Examples of a variety of joining methods that can be used include flash pad fusion welding; fusion welding using TIG, MIG, laser or the like; fusion welding using an electron beam, laser, or plasma; friction welding; solid-phase joining using fusing (hot caulking) or mechanical clinching; ultrasonic joining; friction stirring welding (FSW); hybrid joining such as (e.g.) MIG + laser; clad insert welding; abutting (cold pressure welding); and diffusion bonding.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. An electric generating coil assembly (44) comprising:
a wire coil part (51) including a first end section, a second end section (54) and an aluminum coiled section (51 a); and
a conductive wire connecting part (52) electrically connected to at least one of the first and second section ends of the wire coil part (51), with the conductive wire connecting part (52) being at least partially formed of a more bendable material than the aluminum coiled section (51 a) of the wire coil part (51).

2. The electric generating coil assembly (44) according to claim 1, wherein
the conductive wire connecting part (52) includes a bent section (54b) and a rectilinear section (53g), with the bent section (53b, 53c) being connected to the first end section of the wire coil part (51), and being bent at an intermediate point along the bent section, and the rectilinear section (53g) extending rectilinearly from the bent section with at least the bent section being made of a copper wire material.

3. The electric generating coil assembly (44) according to claim 1, further comprises
a bobbin (50) including a tubular body portion (50a) and a pair of flange parts (50b, 50c) disposed on opposite axial ends of the tubular body portion (50a), with the aluminum wire coil part (51) wrapped around an outer circumferential surface of the tubular body portion (50a) and the conductive wire connecting part (52) extending externally from at least one of the flange parts (50b,50c).

4. The electric generating coil assembly (44) according to claim 1, wherein
the conductive wire connecting part (52) is joined to the wire coil part (51) by welding.

5. The electric generating coil assembly (44) according to claim 1, wherein
the first end section of the aluminum wire coil part (51) is curved; and
the conductive wire connecting part (52) includes a curvilinear section (53a) connected to the first end section of the aluminum wire coil part (51), with the curvilinear section (53a) being curved as a continuation of the first end section.

6. The electric generating coil assembly (44) according to claim 1, wherein
at least one of the first and second end sections includes an aluminum bent section (54b) extending between the coiled section (51a) of the wire coil part (51) and the conductive wire connecting part (52), with at least a bent section (54b) of the conductive wire connecting part (52) being made of a copper wire material.

7. An electric generator hub (10) including the coil assembly (44) according to claim 1, wherein
the electric generator hub (10) includes a hub axle (15), a hub shell (18) rotatably mounted on the hub axle (15) and a generator mechanism (20) with a magnet (41) connected to the hub shell (18) and an internal fixed unit (42) including the coil assembly (44) mounted on the hub axle (15).

8. The electric generator hub (10) according to claim 7, wherein
the electric generating mechanism (20) is a claw-pole electric generating mechanism (20) in which the internal fixed unit (42) further includes a yoke (46) surrounding the periphery of the coil assembly (44), with a plurality of sets of first and second stacked yokes facing each other on either side of the coil assembly (44).

9. The electric generator hub (10) according to claim 8, wherein
the internal fixed unit (42) further includes a cover member (49) that covers at least a portion of outer circumferential surfaces of the first and second stacked yokes.

10. The electric generator hub (10) according to claim 7, wherein
the conductive wire connecting part (52) has first and second end portions (53,54) that are connected to both ends of the wire coil part (51), with the first end portion (53) being connected to a ground terminal that is electrically connected to the hub axle (15); and the second end portion (54) being connected to an external terminal that is mounted on the hub axle (15) outside of the hub shell (18).
